# FASCICULE DE BREVET EUROPEEN

(11) **EP 0 485 023 B1**
(45) Date de publication et mention de la délivrance du brevet: **25.01.1995**
(21) Numéro de dépôt: 91202825.5
(22) Date de dépôt: 31.10.1991
(51) Int. Cl.: G01L 1/26, G01G 21/23

(54) **Elément à jauge de contrainte**
Vorrichtung mit Dehnungsmessstreifen
Strain gauged element

(30) Priorité: 09.11.1990 FR 9013915
(43) Date de publication de la demande: 13.05.1992
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Polaert, Rémy, F-75008 Paris (FR); Hazan, Jean-Pierre, F-75008 Paris (FR)
(74) Mandataire: Landousy, Christian

(56) Documents cités:
- DE-U- 8 705 713
- DE-U- 8 801 039
- FR-A- 2 409 495
- US-A- 4 433 741
- Measurement Techniques, vol. 31, no. 5, mai 1988, New York, US, pages 439- 443; I.I. Burtkovskii: "Platform balance with measuring supports in force-transmitting form"

## Description

L'invention concerne un élément à jauge de contrainte comprenant une jauge de contrainte pressée entre deux membres presseurs qui appliquent des forces de pression.

Un tel élément trouve son application dans la détection ou la mesure de forces notamment dans des capteurs de forces. Ceux-ci peuvent permettre de réaliser par exemple des balances, des détecteurs de charges,...

Il est connu dans l'analyse de la rigidité des matériaux de placer un échantillon sur deux appuis puis d'opérer une pression de l'autre côté de l'échantillon au milieu des deux appuis en exploitant son aptitude à la flexion. Une disposition analogue est mise en oeuvre pour mesurer des forces dans des capteurs utilisant des jauges de contrainte formées de résistances déposées sur un support rigide : deux appuis sont solidaires d'un premier membre presseur et l'apppui placé en opposition est solidaire d'un second membre presseur. Ceci est par exemple décrit dans "Strain sensitivity of thick-film resistors" J.S. SHAH IEEE Trans. CHMT-3, n°4, 1980, p.554. Mais le mode de liaison entre la jauge et les membres presseurs détermine la validité de la mesure :
- une liaison trop rigide entraîne des contraintes surabondantes (état hyperstatique) et la mesure peut devenir défectueuse,
- une liaison trop lâche peut laisser apparaître un jeu entre les membres presseurs ce qui peut conduire à des déplacements relatifs entre la jauge et les membres presseurs déplaçant ainsi les points d'appui. La reproductibilité de la mesure en est altérée.

Les appuis peuvent avoir la forme d'un couteau. Les couteaux doivent être bien parallèles entre eux et ceci nécessite un usinage précis des différents organes.

On connaît également le document DE-U 8 705 713 qui concerne une plateforme de pesage de véhicule munie d'un dispositif générant une force de rappel en présence de forces transversales afin d'obtenir un centrage et un rappel automatique de la plateforme. Pour assurer ce déplacement latéral (en translation) de la plateforme, il est nécessaire d'utiliser deux rouleaux pour chacune des directions, pour lesquelles on désire opérer ledit centrage. Un dispositif compact est obtenu en plaçant deux rouleaux l'un sur l'autre en leur donnant une forme de diabolo. Ce dispositif permet de corriger l'action de forces latérales à l'aide de mouvements de translation. Il s'agit en fait d'une solution mécaniquement sophistiquée pour résoudre un problème de centrage de la plateforme.

Le problème à traiter par l'invention n'est pas un problème de centrage d'une plateforme mais celui de l'utilisation d'organes mécaniquement imparfaits dans des dispositifs de pesage de grande diffusion.

En effet, pour des applications destinées à une large diffusion pour des raisons de coût, il n'est pas possible d'utiliser des organes parfaitement usinés. Les organes que l'on est conduit à utiliser sont imparfaits quant à leur planéité, leur parallélisme, leur structure.

Le problème posé est de déterminer une construction d'un élément à jauge de contrainte qui soit à la fois robuste, fiable, facile à assembler et présentant un faible coût de réalisation.

La solution consiste en ce que les forces de pression appliquées par au moins un des membres presseurs sont transmises à une première face de la jauge de contrainte par un croisillon formé de deux tiges cylindriques, le contact entre la jauge de contrainte (respectivement ledit membre presseur) et le croisillon s'opérant sur une génératrice d'une des tiges (respectivement de l'autre tige) du croisillon permettant audit membre presseur de disposer d'un mouvement de basculement autour de ladite tige (respectivement de l'autre tige).

Ainsi avantageusement une erreur de parallélisme peut être tolérée entre la surface de la jauge de contrainte et la surface du membre presseur qui est en contact avec le croisillon.

Il est possible que la jauge de contrainte soit ainsi en contact avec plusieurs membres presseurs à l'aide de plusieurs croisillons. Mais, préférentiellement, pour réaliser un capteur de forces à faible coût, les forces de pression, appliquées en réaction sur une seconde face de la jauge de contrainte par l'autre membre presseur, sont transmises par deux tiges cylindriques, sensiblement parallèles entre elles, placées à une certaine distance l'une de l'autre vers chaque extrémité de la jauge de contrainte, une des tiges du croisillon agencé à la première face étant placée sensiblement à la moitié de ladite distance et sensiblement parallèlement aux deux autres tiges agencées à ladite seconde face.

Les deux tiges agencées à la seconde face sont préférentiellement constituées de deux fils tendus. Leur diamètre peut être choisi inférieur à la flèche maximale que peut présenter sans se rompre la jauge de contrainte. Celle-ci vient alors en butée sur le membre presseur pour limiter son déplacement.

Il est possible d'utiliser un ou plusieurs éléments à jauge de contrainte de ce type pour réaliser des capteurs de forces utilisés par exemple dans une balance ou pour constituer des détecteurs formés par exemple de plaques sur lesquelles s'exercent des forces de pression.

L'invention sera mieux comprise à l'aide des figures suivantes données à titre d'exemples non limitatifs qui représentent :
- figure 1 : un schéma d'un élément à jauge de contrainte selon l'invention,
- figure 2 : un schéma détaillé d'une jauge de contrainte munie d'un croisillon et de deux tiges pour l'application des forces,
- figure 3 : un schéma représentant des croisillons et leur positionnement par rapport à la jauge de contrainte.

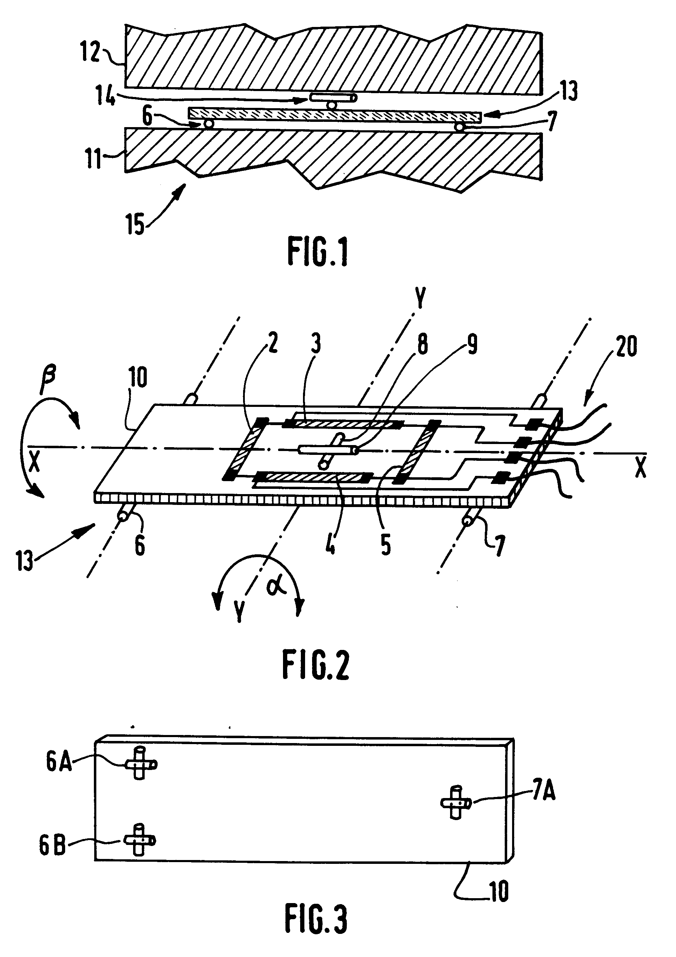

La figure 1 représente un élément à jauge de contrainte 15 comprenant deux membres presseurs 11, 12 qui pressent une jauge de contrainte 13 à l'aide d'un croisillon 14 et de deux tiges 6, 7.

La figure 2 représente un schéma plus détaillé de la jauge de contrainte 13. Elle est constituée d'un support 10, par exemple en alumine, sur lequel est déposé un réseau de résistances 2, 3, 4, 5 disposées par exemple en pont de Wheatstone pour ne pas être sensible aux écarts de température. Ces résistances peuvent être déposées par exemple par sérigraphie. Les liaisons électriques sont assurées par des fils 20.

La jauge 13 supporte un croisillon, formé de deux tiges cylindriques 8, 9, et repose sur deux tiges 6, 7. Le croisillon est préféré à une simple bille (qui idéalement appliquerait une force en un point) car celle-ci conduirait à une contrainte locale importante qui risquerait de casser la jauge. Pour éviter cela et disposer d'une mobilité équivalente on utilise un croisillon formé de deux tiges cylindriques de sorte qu'une génératrice d'une des tiges soit sensiblement parallèle aux tiges 6, 7. On a en effet constaté que les membrespresseurs 11, 12 qui sont généralement sensiblement plans ne sont pas rigoureusement parallèles entre eux : un écart angulaire α selon l'axe YY n'a ainsi plus d'importance, le membre presseur 11 pivotant alors autour de la tige 8. De même un écart angulaire β selon l'axe XX devient sans importance, le membre presseur 12 pivotant également alors autour de la tige 9.

Pour assurer la stabilité en position de ces tiges on peut assembler avec un point de soudure les deux tiges 8 et 9, sous un angle de 90° pour disposer d'une mobilité totale.

Préférentiellement les deux génératrices porteuses des deux tiges ne sont pas dans un même plan. Néanmoins cela est possible si l'on ménage des lumières soit dans la jauge de contrainte soit dans le membre presseur concerné et en adaptant leurs dimensions.

Pour un fonctionnement correct de l'élément à jauge de contrainte une des tiges du croisillon (la tige 8 sur la figure 2) est placée sensiblement parallèle aux tiges 6 et 7 et sensiblement au centre de la distance qui les sépare. Pour maintenir le croisillon 14 en position on le maintient à l'aide d'un produit souple par exemple une colle souple ou à l'aide d'un enrobage par exemple un composé élastomère comme le "SYLGARD"*. Il peut assurer également d'une part, une protection des couches résistives de la jauge contre les attaques éventuelles de liquides corrosifs et d'autre part un isolement électrique.
* marque déposée.

Le maintien du croisillon en position peut également être obtenu en aménageant des logements adaptés dans la jauge de contrainte et/ou dans le membre presseur.

Le membre presseur 11 peut lui aussi ne pas présenter une planéité rigoureuse. Pour compenser cela, on peut comme cela a déjà été indiqué remplacer les tiges 6, 7 par trois appuis ponctuels positionnés ou par trois croisillons (6A, 6B et 7A) identiques au croisillon 14 déjà décrit de façon à délimiter un pseudo-triangle de sustentation, comme cela est représenté sur la figure 3.

Dans le cas général où le membre presseur 11 est relativement plan, une solution intermédiaire peut être adoptée. Pour cela, les croisillons 6A, 6B et 7A sont remplacés par de simples tronçons de tiges parallèles entre elles et situées aux mêmes endroits que les croisillons 6A, 6B et 7A précédents. Ainsi la jauge de contrainte qui est placée sur ces tronçons porte sur 3 génératrices selon un pseudo-triangle de sustentation. Le terme pseudo signifiant que les sommets du triangle ne sont pas réellement ponctuels.

A titre d'exemple, un élément à jauge de contrainte selon l'invention a été utilisé pour réaliser une balance. Il était constitué d'une plaque d'alumine de 45 x 16 x 1 mm. Le croisillon était constitué de deux tiges de 1,5 mm de diamètre et 6 mm de longueur. Les tiges 6 et 7 étaient constituées de deux fils tendus de 0,1 mm de diamètre. Préférentiellement ce diamètre est inférieur à la flèche maximale que peut présenter sans se rompre la jauge de contrainte.

Egalement à titre d'exemple plusieurs éléments à jauge de contrainte selon l'invention, ont été utilisés pour réaliser une table à commandes tactiles. Pour cela le plateau de la table était soutenu par trois tels éléments disposés en triangle de sorte que les coordonnées du point d'application d'une force appliquée en un point quelconque du plateau pouvaient être déterminées à partir des signaux délivrés par chaque élément à jauge de contrainte.

## Revendications

1. Elément (15) à jauge de contrainte comprenant une jauge de contrainte pressée entre des membres presseurs (11, 12), caractérisé en ce que les forces de pression appliquées par au moins un (12) des membres presseurs sont transmises à une première face de la jauge de contrainte (13) par un croisillon (14) formé de deux tiges cylindriques (8, 9), le contact entre la jauge de contrainte (13), respectivement ledit (12) membre presseur, et le croisillon (14) s'opérant sur une génératrice d'une (8) des tiges, respectivement de l'autre (9), tige du croisillon permettant audit (12) membre presseur de disposer d'un mouvement de basculement autour de ladite (8) tige, respectivement de l'autre (9).

2. Elément à jauge de contrainte selon la revendication 1 caractérisé en ce que les forces de pression appliquées en réaction sur une seconde face de la jauge de contrainte (13) par un autre (11) membre presseur sont transmises par au moins un croisillon.

3. Elément à jauge de contrainte selon la revendication 2 caractérisé en ce que lesdites forces de réaction sont transmises par trois croisillons (6A, 6B, 7A) disposés selon un pseudo-triangle de sustentation.

4. Elément à jauge de contrainte selon la revendication 1 caractérisé en ce que les forces de pression, appliquées en réaction sur une seconde face de la jauge de contrainte par un autre (11) membre presseur, sont transmises par deux tiges cylindriques (6, 7), sensiblement parallèles entre elles, placées à une certaine distance l'une de l'autre vers chaque extrémité de la jauge de contrainte (13), le contact s'opérant selon des génératrices, une (8) des tiges du croisillon agencé à la première face étant placée sensiblement à la moitié de ladite distance et sensiblement parallèlement aux deux autres tiges (6, 7) agencées à ladite seconde face.

5. Elément selon la revendication 4 caractérisé en ce que les deux tiges agencées à la seconde face sont constituées de deux fils tendus.

6. Elément selon une des revendications 4 ou 5 caractérisé en ce qu'une des tiges agencées à la seconde face est limitée à deux tronçons extrêmes colinéaires, l'autre tige étant réduite à un tronçon central de sorte que les trois tronçons constituent un pseudo-triangle de sustentation.

7. Elément selon une des revendications 4 à 6 caractérisé en ce que le diamètre des tiges est inférieur à la flèche maximale que peut présenter sans se rompre la jauge de contrainte.

8. Elément selon une des revendications 1 à 7 caractérisé en ce que les tiges du croisillon ont environ 1,5 mm de diamètre et 6 mm de longueur.

9. Utilisation d'au moins un élément à jauge de contrainte selon une des revendications 1 à 8, pour la réalisation soit d'un capteur de force, soit d'une balance, soit d'une table à commandes tactiles.

## Patentansprüche

1. Dehnungsmeßstreifenelement (15) mit einem zwischen Druckglieder (11, 12) gedrückten Dehnungsmeßstreifen, dadurch gekennzeichnet, daß die von wenigstens einem (12) der Druckglieder ausgeübten Druckkräfte über ein aus zwei zylindrischen Stäben (8, 9) bestehendes Kreuz (14) auf eine erste Fläche des Dehnungsmeßstreifens (13) übertragen werden, wobei der Kontakt zwischen dem Dehnungsmeßstreifen (13), beziehungsweise dem genannten (12) Druckglied, und dem Kreuz (14) auf eine Mantellinie einer (8) der Stäbe, beziehungsweise des anderen (9) Stabs, des Kreuzes erfolgt, wodurch dem genannten (12) Druckglied eine Schwenkbewegung um den genannten (8) Stab, beziehungsweise den anderen (9) Stab, ermöglicht wird.

2. Dehnungsmeßstreifenelement nach Anspruch 1, dadurch gekennzeichnet, daß die Gegendruckkräfte, die von einem anderen (11) Druckglied auf eine zweite Fläche des Dehnungsmeßstreifens (13) ausgeübt werden, mittels eines Kreuzes übertragen werden.

3. Dehnungsmeßstreifenelement nach Anspruch 2, dadurch gekennzeichnet, daß die genannten Gegenkräfte durch drei Kreuze (6A, 6B, 7A) übertragen werden, die einem tragenden Pseudo-Dreieck entsprechend angeordnet sind.

4. Dehnungsmeßstreifenelement nach Anspruch 1, dadurch gekennzeichnet, daß die Gegendruckkräfte, die von einem anderen (11) Druckglied auf eine zweite Fläche des Dehnungsmeßstreifens ausgeübt werden, durch zwei zylindrische, im wesentlichen zueinander parallele Stäbe (6, 7) übertragen werden, die in einem gewissen Abstand zueinander an jedem Ende des Dehnungsmeßstreifens (13) plaziert sind, wobei eine (8) der an der ersten Fläche angeordneten Stäbe des Kreuzes im wesentlichen auf der Hälfte des genannten Abstandes und im wesentlichen parallel zu den zwei anderen an der genannten zweiten Fläche angeordneten Stäbe (6, 7) plaziert ist.

5. Element nach Anspruch 4, dadurch gekennzeichnet, daß die zwei an der zweiten Fläche angeordneten Stäbe, aus zwei gespannten Drähten gebildet werden.

6. Element nach Anspruch 4 oder 5, dadurch gekennzeichnet, daß einer der an der zweiten Fläche angeordneten Stäbe durch zwei äußere kolineare Abschnitte begrenzt wird, wobei der andere Stab auf einen zentralen Abschnitt reduziert ist, so daß die drei Abschnitte ein tragendes Pseudo-Dreieck bilden.

7. Element nach einem der Ansprüche 4 bis 6, dadurch gekennzeichnet, daß der Durchmesser der Stäbe kleiner ist als die maximale Durchbiegung, die auftreten kann, ohne daß der Dehnungmeßstreifen reißt.

8. Element nach einem der Ansprüche 1 bis 7, dadurch gekennzeichnet, daß die Stäbe des Kreuzes ungefähr einen Durchmesser von 1,5 mm und eine Länge von 6 mm haben.

9. Verwendung wenigstens eines Dehnungsmeßstreifenelementes nach einem der Ansprüche 1 bis 8 für die Realisierung eines Kraftaufnehmers oder einer Waage oder eines durch Berührung betätigten Bedienungsfeldes.

## Claims

1. A strain gauge element (15) comprising a strain gauge pressed between two pressure members (11, 12), characterised in that the compression forces applied by at least one (12) of the pressure members are transmitted to a first surface of the strain gauge (13) by a cross (14) formed by two cylindrical rods (8, 9), the contact between the strain gauge (13) or the said pressure member (12) and the cross (14) taking place on a generatrix of one (8) of the rods or the other rod (9) of the cross, enabling said pressure member (12) to perform a tilting movement about said one rod (8) or the other rod (9).

2. A strain gauge element as claimed in Claim 1, characterised in that the reactive compression forces exerted on a second surface of the strain gauge (13) by another pressure member (11) are transmitted by at least one cross.

3. A strain gauge element as claimed in Claim 2, characterised in that said reactive forces are transmitted by three crosses in a pseudo-triangular supporting arrangement.

4. A strain gauge element as claimed in Claim 1, characterised in that the reactive compression forces exerted on a second surface of the strain gauge by another pressure member (11) are transmitted by two cylindrical rods (6, 7), which are substantially parallel to one another and disposed at a given distance from one another at either end of the strain gauge (13), one (8) of the rods of the cross provided on the first surface being disposed substantially at half said distance and substantially parallel to the two other rods (6, 7) provided at said second surface.

5. An element as claimed in Claim 4, characterised in that the two rods provided at the second surface are formed by two tensioned wires.

6. An element as claimed in Claim 4 or 5, characterised in that one of the rods provided at the second surface is reduced to two collinear outer rod portions, while the other rod is reduced to one central portion in such a manner that the three portions form a pseudo-triangular supporting arrangement.

7. An element as claimed in any one of the Claims 4 to 6, characterised in that the diameter of the rods is smaller than the maximum deflection which can occur without the strain gauge breaking.

8. An element as claimed in any one of the Claims 1 to 7, characterised in that the rods of the cross are approximately 1.5 mm in diameter and 6 mm in length.

9. The use of at least one strain gauge element as claimed in any one of the Claims 1 to 8 for the realisation of a force transducer, or a balance, or a touch-sensitive control tablet.
